# EUROPEAN PATENT SPECIFICATION

(11) **EP 3 439 485 B1**
(45) Date of publication and mention of the grant of the patent: **03.05.2023**
(21) Application number: 17718207.8
(22) Date of filing: 31.03.2017
(51) Int. Cl.: A23G 9/28, A23G 9/30

(54) **FROZEN DISPENSING MACHINE HEAT TREATMENT SYSTEM AND METHOD**
WÄRMEBEHANDLUNGSSYSTEM UND -VERFAHREN FÜR GEFRORENE AUSGABEMASCHINE
SYSTÈME ET PROCÉDÉ DE TRAITEMENT THERMIQUE DE MACHINE DE DISTRIBUTION DE PRODUITS CONGELÉS

(30) Priority: 07.04.2016 US 201662319408 P
(43) Date of publication of application: 13.02.2019
(73) Proprietor: Taylor Commercial Foodservice, LLC, Rockton, IL 61072 (US)
(72) Inventor: MINARD, James J., Rockton Illinois 61072 (US)
(74) Representative: Finch, Steven Caffall
(86) International application number: PCT/US2017/025363
(87) International publication number: WO 2017/176581

(56) References cited:
- EP-A1- 2 936 992
- WO-A1-2009/027757
- WO-A1-2014/188351
- US-A- 4 522 041
- US-A- 4 680 944

## Description

### BACKGROUND

The subject matter disclosed herein relates to frozen food product dispensing machines. More specifically, the present disclosure relates to heat treatment of frozen food product dispensing machines.

In a typical frozen food dispensing machine, such as a frozen dessert dispenser, product or product mix, typically in a liquid state is delivered to the machine. The bag is opened, and the product or mix is emptied from the bag into a storage hopper portion of the machine. The hopper stores the product and refrigerates it, without freezing the product. To dispense, the product is flowed from the hopper into a freezing cylinder where it is frozen, then to a dispensing portion where it is dispensed as frozen food. To ensure clean or sanitary conditions of the dispensing machine and the frozen food itself, the machine is either emptied, cleaned and sanitized or sanitized using a heat-treating cycle at a selected interval, usually once per day. Emptying the machine results in considerable waste of product, which is disposed from the machine. The possibility exists of potential contamination or spillage of product emptied into the hopper once the sanitizing steps are complete.

Two methodologies currently are utilized to ensure that the dispensed product is safe to consume. The first includes a periodic heat treatment of the entire machine, including product storage bins, transport lines, freezing cylinder and dispensing portion, including the product therein. This is a large volume of material and product to bring up to heat treatment temperature, which subsequently takes a considerable amount of time and energy. The other method involves periodically draining the entire machine and manually cleaning it. This is labor and time intensive, and also costly since the drained product is discarded.

WO2014/188351 A1 discloses a frozen food dispensing machine including a bag-in-box product storage container, a cooling and heating cylinder, and a pump that recirculates the product through the cooling and heating cylinder in a pasteurization cycle.

EP 2936992 A1 discloses periodic cleaning and recirculating pasteurization processes in a similar machine.

### SUMMARY

In accordance with the present invention there are provided: in one aspect, a frozen food dispensing machine; and in another aspect, a method of performing a heat treatment cycle on a volume of product in the frozen food dispensing machine; all as defined in the independent claims. Optional features are defined in the dependent claims.

In one embodiment, a frozen food dispensing machine includes a product storage portion including a first volume of product and a freezing portion operably connected to the product storage portion. A dispensing portion is operably connected to the freezing portion to dispense a frozen food product and a conductive heater is located at a heater location of the frozen food dispensing machine to heat a second volume of product in the frozen food dispensing machine.

The heater location is a freezing vessel of the freezing portion.

In other arrangements, not claimed, the heater location is one or more of a product delivery line or a recirculation line.

The conductive heater includes a heating element connected to a voltage source via one or more electrical leads.

Optionally, in this or other embodiments a heat exchanger at least partially surrounds the heater location, the heat exchanger including a plurality of heat exchanger passages.

Optionally, in this or other embodiments the conductive heater is located in contact with the heat exchanger.

Additionally or alternatively, in this or other embodiments the conductive heater is located in contact with one or more of a heat exchanger supply line or a heat exchanger return line.

The conductive heater is configured to heat the second volume of product to a heat treatment temperature.

Optionally, in this or other embodiments the heat treatment temperature is at least 65.6 degrees Celsius (150 degrees Fahrenheit).

In another embodiment, a freezing portion of a frozen food dispensing machine includes a freezing vessel configured to freeze a flow of product therethrough and a conductive heater located at the freezing vessel to selectably heat the flow of product to a heat treatment temperature.

The conductive heater includes a heating element connected to a voltage source via one or more electrical leads.

Optionally, in this or other embodiments the conductive heater is in direct contact with the freezing vessel.

Additionally or alternatively, in this or other embodiments a heat exchanger at least partially surrounds the freezing vessel, the heat exchanger including a plurality of heat exchanger passages.

Additionally or alternatively, in this or other embodiments the conductive heater is in direct contact with the heat exchanger.

Additionally or alternatively, in this or other embodiments the conductive heater is located in contact with one or more of a heat exchanger supply line or a heat exchanger return line.

Additionally or alternatively, in this or other embodiments the heat exchanger is a microchannel heat exchanger.

Additionally or alternatively, in this or other embodiments the heat treatment temperature is at least 65.6 degrees Celsius (150 degrees Fahrenheit).

In yet another embodiment, a method of performing a heat treatment cycle on a volume of product in a frozen food dispensing machine includes defining a heat treatment circuit including the freezing portion, heating the volume of product to a heat treatment temperature within a first time duration via a conductive heater located at the freezing portion and holding the volume of material at the heat treatment temperature for a second time duration.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 is schematic view of a frozen food dispensing machine configured for dispensing operation and including some elements of the claimed invention;
FIG. 2 is a schematic view of a frozen food dispensing machine configured for heat treatment operation and including some elements of the claimed invention;
FIG. 3 is another schematic view of an embodiment of a frozen food dispensing machine in accordance with the claimed invention;
FIG. 4 is a perspective view of an embodiment of a freezing cylinder of a frozen food dispensing machine;
FIG. 5 is a schematic view of a conductive heater location in a frozen food dispensing machine including some elements of the claimed invention;
FIG. 6 is a cross-sectional view of an embodiment of a freezing cylinder of a frozen food dispensing machine.

### DETAILED DESCRIPTION

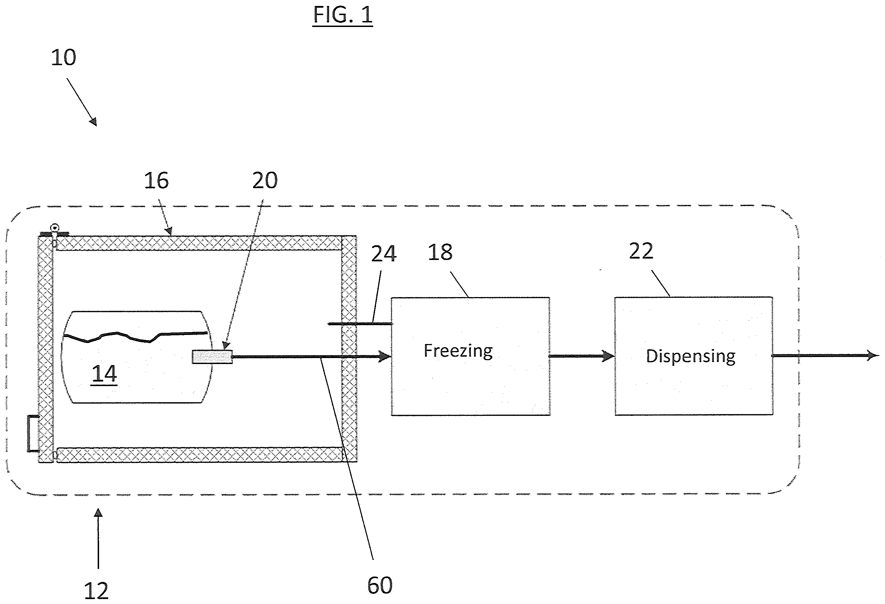

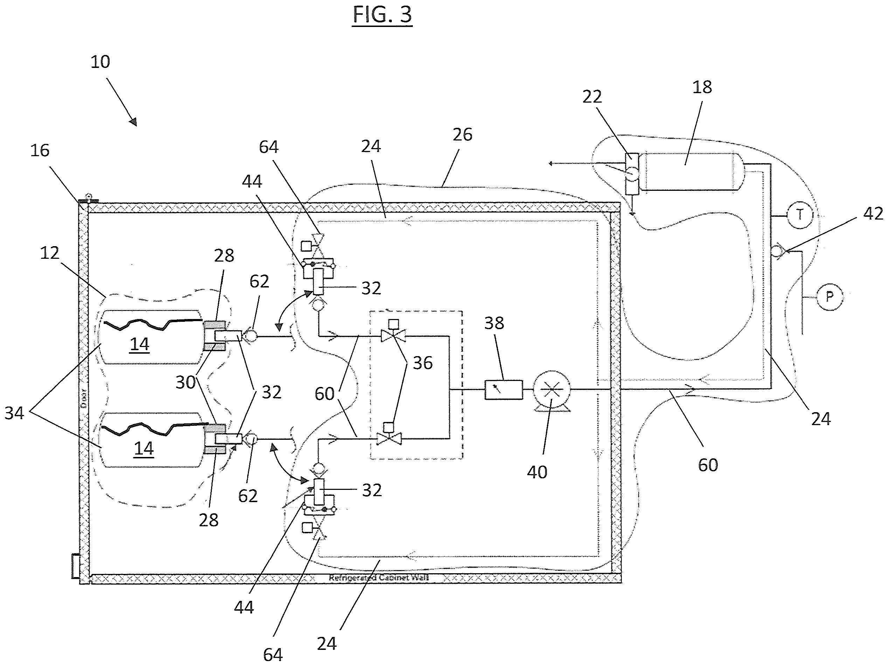

In FIG. 1 is shown a schematic of a frozen food dispensing machine (hereinafter "machine") 10 configured for dispensing operation. The machine 10 includes a product storage section 12, where a volume of liquid product 14 is stored for use by the machine 10. The product storage section 12 includes a storage compartment 16, which in some embodiments is refrigerated to about 5 degrees Celsius (41 degrees Fahrenheit) or other temperature, while in other embodiments the storage compartment 16 is maintained at about ambient temperature. The volume of product 14 is stored in a container, for example, a bag or a bin and is connected to a freezing cylinder 18 via a fitting 20. Shown best in FIG. 3, a product bag 34 is equipped with a fitment 28 that includes a self-closing seal 30 that prevents flow from the bag 34 unless the fitting 20 is connected to the product bag 34. Referring again to FIG. 1, the liquid product 14 is frozen at the freezing cylinder 18 and conveyed to a dispensing portion 22 for dispensing of frozen product into a container, such as a cup or a cone (not shown).

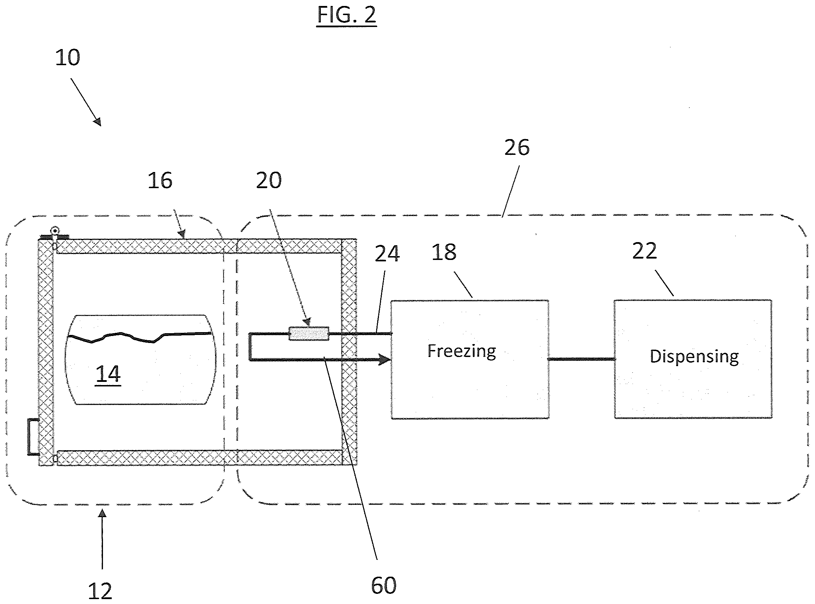

Referring now to FIG. 2, to ensure the product is safe for consumption, the machine 10 is periodically cycled through a heat treatment operation. The machine 10 utilizes a unique method to reduce the heat treated volume and thus reduce the time and energy utilized for a heat treatment cycle. Before initiating heat treatment, the fitting is disconnected from the product 14 and connected to a recirculation line 24. The product 14 is isolated from the remainder of the machine 10, and connecting the fitting 20 to the recirculation line 24 closes a heat treat circuit 26 with the freezing cylinder 18 and the dispensing portion 22. In some embodiments, the recirculation line 24 is connected to the freezing cylinder 18, while in other embodiments the recirculation line is connected to the dispensing portion 22. In addition, the recirculation line 24 may be permanently connected to the machine 10, or it may be a separate part connected to the machine 10, for heat treatment.

The product in the heat treat circuit 26 is then heated up to a heat treat temperature, in some embodiments about 65.6 degrees Celsius (150 degrees Fahrenheit), for a selected duration of time to accomplish the heat treatment. In some embodiments, the product is heated to the heat treatment temperature within 90 minutes or less, and will hold at the heat treat temperature for at least 30 minutes. After heat treatment is completed, the product in the heat treat circuit is then cooled to operating temperature and the fitting 20 is disconnected from the recirculation line 24 and reconnected to the product 14 for resumption of normal operation of the machine 10. Embodiments of the claimed invention incorporating this system and method will be described in more detail below. To heat the product in the heat treat circuit 26, a heater disposed at the freezing cylinder 18 (discussed below) is utilized. In other arrangements, not claimed, the heater may be located at another portion of the heat treat circuit 26, or the heat treat circuit may be heated by, for example, a heat wrap around lines of the heat treat circuit 26. In still other arrangements, not claimed, the heat treat circuit 26 may direct product through a heater box (not shown) to heat the product.

Referring now to FIG. 3, another exemplary embodiment is shown. The machine 10 includes a storage compartment 16 that includes product 14 stored in two product bags 34. As stated above, the product 14 may alternatively be stored in a bin, bottle or other container. Further, while two product bags 34 are illustrated, other quantities may be utilized depending on capacity and use of the storage compartment 16. For example, other embodiments may include 1, 3, 4 or 6 or more product bags 34. In some embodiments, each product bag 34 has a capacity of about 10 liters, but one skilled in the art will readily appreciate that other sizes may be utilized. The probe 32 includes a one-way or check valve 62 that prevents inflow of material or contaminants into the product bag 14. The probe 32 is configured such that product 14 flow is in one direction only, out of product bag 34. The product bag 34 is equipped with fitment 28 that includes self-closing seal 30 that prevents flow from the product bag 34 unless the probe 32 is inserted into the product bag 34.

During normal dispensing operation of the machine 10, a probe 32 is connected to the fitment 28 to allow product 14 to flow from the product bag 34. The probe 32 is connected to, or is an end portion of, a product delivery line 60. The product 14 flows through the probe 32, along the product delivery line 60, and in some embodiments through a changeover valve 36, and then in some embodiments past a switch 38 to detect flow from two or more product bags 34. The product 14 is urged from the product bag 34 by a pump 40 located downstream of the switch 38. Downstream of the pump 40, the product 14 flow exits the storage compartment 16. While in the embodiment shown, the pump 40 is located inside the refrigerated compartment, in other embodiments the pump 40 may be located outside of the storage compartment 16.

From the pump 40, the product 14 flow continues along the product delivery line 60 toward the freezing cylinder 18. Before reaching the freezing cylinder 18, air is injected into the product 14 flow via an air injection valve 42. Once frozen at the freezing cylinder 18, the product 14 is dispensed at the dispenser 22. Air may be injected at any location into the product at any location between the probe 32 and the dispensing portion 22.

Periodically, in some embodiments once per day, the machine 10 undergoes the heat treat cycle. To configure the machine 10 for the heat treat cycle, the probes 32 are disconnected from the fitments 28. Each probe 32 and a corresponding recirculation port 44 of the recirculation line 24 may be sanitized, then each probe 32 is then installed to the corresponding recirculation port 44 of the recirculation line 24. Once the probes 32 are installed to the recirculation ports 44, the valve coupling 64 opens, one or more of the changeover valves 36 open, and the pump 40 is started to circulate product 14 through a heat treat circuit 26, defined from the pump 40 through the product delivery line 60, through the freezing cylinder 18, from the freezing cylinder 18 through the recirculation line 24 and through the recirculation port 44/probe 32 interface and back to the pump 40.

To perform the heat treat, the product 14 flowing through the heat treat circuit 26 is heated from the operational temperature of 5 degrees Celsius (41 degrees Fahrenheit) to the heat treat temperature of 65.6 degrees Celsius (150 degrees Fahrenheit) or higher, within 90 minutes or less, and will hold at the heat treat temperature for at least 30 minutes. Once the heating and hold portions of the heat treat cycle, the product flowing through the heat treat circuit 26 is cooled from the heat treat temperature back to the operational temperature in a time span of 120 minutes or less. In some embodiments, the cooling is aided by activating the freezing cylinder 18.

To return the machine 10 to normal operation once the product 14 is cooled, the pump 40 is stopped. The probes 32 are disconnected from the recirculation ports 44, the valve coupling 64 closes, and both the probes 32 and the fitments 28 are sanitized, and each probe 32 is then connected to a corresponding fitment 28.

Disconnecting the probes 32 from the fitments 28 prior to the heat treat operation isolates the product bags 34 from the heat treat circuit 26 thus greatly reducing a volume of product 14 that is heat treated, and as a consequence reducing the time and energy necessary for the heat and hold portions of the heat treat cycle. Because the product 14 is stored in the product bag 34 with the check valve 62 preventing flow from the probe 32 into the product bag 34, there is no need to heat treat the product 14 inside the product bag 34.

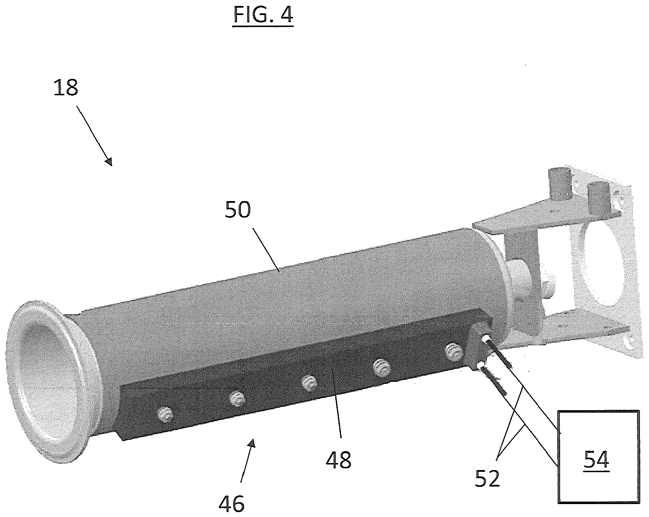

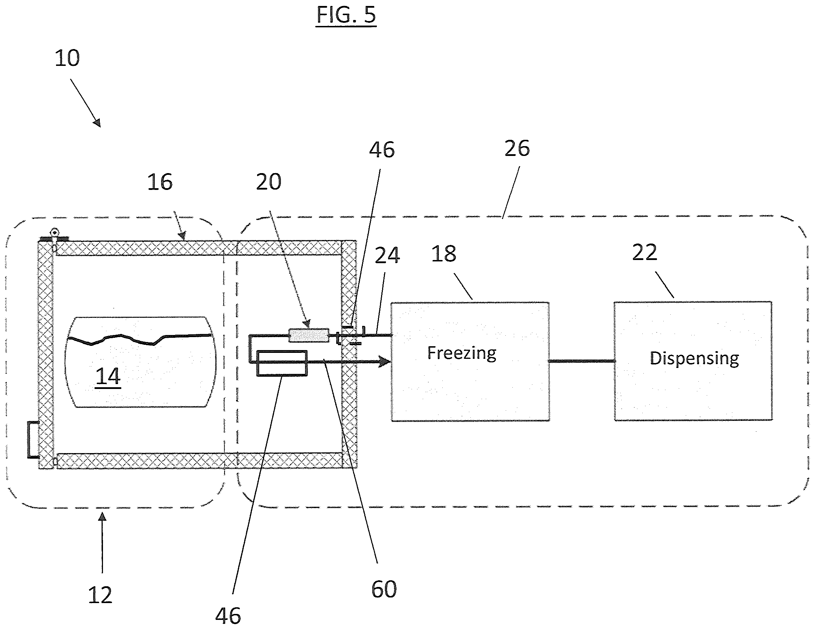

Referring now to FIG. 4, the product 14 flow in the heat treat circuit 26 is heated by a heater located at the freezing cylinder 18. The heater is a conductive heater 46 fixed to an outer wall of the freezing cylinder 18. The conductive heater 46 utilizes a heating element 48 in contact with a freezing cylinder vessel 50, to conductively heat the freezing cylinder vessel 50 and thus heat the product 14 flowing through the freezing cylinder 18. In some embodiment a thermal mastic or graphite gasket (not shown) is located between the heating element 48 and the freezing cylinder vessel 50. The heating element 48 is connected to electrical leads 52, and when a voltage is applied to the electrical leads 52 from a voltage source 54, the heating element 48 heats, thus heating the freezing cylinder vessel 50. In other arrangements, such as shown in FIG. 5, the conductive heater 46 may be disposed at other locations of the machine 10, such as (in an arrangement not claimed) at the product delivery line 60 or (in an arrangement not claimed) at the recirculation line 24, or at an entrance or exit of the freezing cylinder 18.

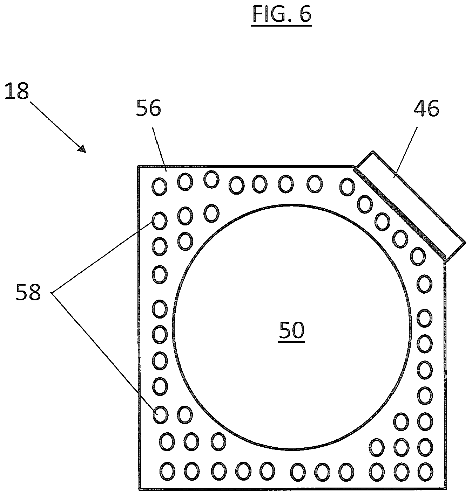

In some embodiments, such as shown in FIG. 6, the conductive heater 46 is used in conjunction with a heat exchanger, for example, a micro-channel heat exchanger (MCHX) 56 wrapped at least partially around the freezing cylinder vessel 50. The MCHX 56 includes a plurality of micro-channels 58 in which a heat transfer medium is located. When energized, the heating element 46 heats the MCHX 56, which in turn heats the freezing cylinder vessel 50. Utilizing the MCHX 56 in conjunction with the conductive heater 46 has the capability of distributing the heating effects of the conductive heater 46 over an increased circumferential area of the freezing cylinder vessel 50 to more quickly and more evenly heat the product 14 flowing through the freezing cylinder vessel 50 during the heat treatment cycle. In some embodiments, the conductive heater 46 heats the freezing cylinder vessel 50 to a freezing cylinder temperature greater than the heat treatment temperature prior to circulating the product through the heat treat circuit 26. In some embodiments, the freezing cylinder temperature is about 79 degrees Celsius (175 degrees Fahrenheit). This allows the product flowing therethrough to be quickly heated to the heat treatment temperature. While in some embodiments, the conductive heater 46 is located at a heat exchanger body of the MCHX 56, in other embodiments, the conductive heater 46 is located at one or more of a MCHX supply line or an MCHX return line.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions or equivalent arrangements not heretofore described. Additionally, while various embodiments have been described, it is to be understood that aspects of the present disclosure may include only some of the described embodiments. Accordingly, the invention is not to be seen as limited by the foregoing description, but is only limited by the scope of the appended claims.

## Claims

1. A frozen food dispensing machine (10), comprising:
a product storage portion (12) having a container to store liquid product (14) for use by the machine;
a freezing cylinder (18) operably connected to the product storage portion (12) via a product delivery line (60) and a pump (40), the freezing cylinder (18) configured to freeze the product;
a dispensing portion (22) operably connected to the freezing cylinder (18), the dispensing portion (22) configured to dispense frozen food product conveyed from the freezing cylinder (18); and
a conductive heater (46) fixed to an outer wall of the freezing cylinder (18) of the frozen food dispensing machine (10), the conductive heater (46) configured to heat a volume of the product (14) in the frozen food dispensing machine (10) within a heat treat circuit (26), wherein the heat treat circuit (26) comprises the freezing cylinder, the product delivery line, and a recirculation line (24), and the conductive heater (46) includes a heating element (48) connected to a voltage source (54) via one or more electrical leads (52);
**CHARACTERISED IN THAT**:
the product storage container comprises a fitment (28) with a self-closing seal (30);
the product delivery line (60) includes a probe (32) that can interact with the fitment (28) to allow product (14) flow from the product storage portion (12) into the product delivery line (60), wherein the probe (32) can be disconnected from the fitment (28) to isolate the product storage portion (12) from the product delivery line (60) and freezing cylinder (18), and wherein the self-closing seal (30) is in a closed position when the probe (32) does not interact with the fitment (28), and wherein the probe (32) further comprises a check valve (62) that is arranged to prevent flow from the product delivery line (60) into the product storage portion (12),
wherein, when the probe (32) is removed from the fitment (28), the probe (32) may be installed to a recirculation port (44) of the recirculation line (24) to define a recirculation port (44)/probe(32) interface, to establish a recirculation flow path for the product (14) that leaves the freezing cylinder (18), flows through the recirculation line (24), flows through the product delivery line (60) and returns to the freezing cylinder (18) as urged by the pump (40),
wherein the heat treat circuit (26) is defined from the pump (40) through the product delivery line (60), through the freezing cylinder (18), from the freezing cylinder (18) through the recirculation line (24) and through the recirculation port (44)/probe (32) interface.

2. The frozen food dispensing machine (10) of claim 1, wherein the freezing cylinder (18) comprises a freezing cylinder vessel (50), wherein the conductive heater (46) is located at the freezing cylinder vessel (50).

3. The frozen food dispensing machine (10) of Claim 1, wherein the freezing cylinder (18) comprises a freezing cylinder vessel (50), and the conductive heater (46) is arranged to heat a micro-channel heat exchanger (56), the micro-channel heat exchanger (56) being wrapped at least partially around the freezing cylinder vessel (50) and including a plurality of micro-channels (58) in which a heat transfer medium is located.

4. The frozen food dispensing machine (10) of claim 3, wherein the conductive heater (46) is located at a heat exchanger body of the micro-channel heat exchanger (56).

5. The frozen food dispensing machine (10) of claim 3, wherein the conductive heater (46) is located at one or more of a heat exchanger supply line and a heat exchanger return line of the micro-channel heat exchanger (56).

6. The frozen food dispensing machine (10) of either Claim 1 or Claim 2, wherein the machine (10) is configured to heat the volume of the product (14) within the heat treat circuit (26) to a heat treatment temperature within 90 minutes, and to hold at the heat treatment temperature for at least 30 minutes.

7. The frozen food dispensing machine (10) of claim 6, wherein the heat treatment temperature is at least 65.6 degrees Celsius (150 degrees Fahrenheit).

8. The frozen food dispensing machine (10) of claim 2, wherein the freezing cylinder vessel (50) is configured to freeze the product (14) flowing therethrough, and wherein the conductive heater (46) is configured to selectably heat the product (14) to a heat treatment temperature.

9. The frozen food dispensing machine (10) of claim 8, wherein the conductive heater (46) is in direct contact with the freezing cylinder vessel (50).

10. A method of performing a heat treatment cycle on a volume of product in the frozen food dispensing machine (10) of claim 1, comprising the steps of:
circulating product (14) through the heat treat circuit (26);
heating the product (14) within the heat treat circuit (26) to a heat treatment temperature within a first time duration via the conductive heater (46);
holding the heated volume of product (14) within the heat treat circuit (26) at the heat treatment temperature for a second time duration; and,
cooling the heated volume of the product (14) within the heat treat circuit (26) via the freezing cylinder (18).

11. The method of claim 10, further comprising the step of:
recirculating the cooled volume of the product (14) through the heat treat circuit (26) via the pump (40).

## Patentansprüche

1. Ausgabemaschine (10) für gefrorene Lebensmittel, die Folgendes umfasst:
einen Produktlagerabschnitt (12) mit einem Behälter zum Lagern eines flüssigen Produkts (14) zur Verwendung durch die Maschine;
einen Gefrierzylinder (18), der via eine Produktförderleitung (60) und eine Pumpe (40) mit dem Produktlagerabschnitt (12) wirkverbunden ist, wobei der Gefrierzylinder (18) dazu ausgelegt ist, das Produkt zu gefrieren;
einen Ausgabeabschnitt (22), der mit dem Gefrierzylinder (18) wirkverbunden ist, wobei der Ausgabeabschnitt (22) dazu ausgelegt ist, ein vom Gefrierzylinder (18) zugeführtes gefrorenes Lebensmittelprodukt auszugeben; und
eine leitende Heizung (46), die an einer Außenwand des Gefrierzylinders (18) der Ausgabemaschine (10) für gefrorene Lebensmittel befestigt ist, wobei die leitende Heizung (46) dazu ausgelegt ist, ein Volumen des Produkts (14) in der Ausgabemaschine (10) für gefrorene Lebensmittel in einem Wärmebehandlungskreis (26) zu erwärmen, wobei der Wärmebehandlungskreis (26) den Gefrierzylinder, die Produktförderleitung und eine Rezirkulationsleitung (24) umfasst und die leitende Heizung (46) ein Heizelement (48) beinhaltet, das via eine oder mehrere elektrische Leitungen (52) mit einer Spannungsquelle (54) verbunden ist;
**DADURCH GEKENNZEICHNET, DASS**:
der Produktlagerbehälter ein Fitting (28) mit einer selbstschließenden Dichtung (30) umfasst;
die Produktförderleitung (60) eine Sonde (32) beinhaltet, die mit dem Fitting (28) interagieren kann, um es zu erlauben, dass ein Produkt (14) aus dem Produktlagerabschnitt (12) in die Produktförderleitung (60) fließt, wobei die Sonde (32) vom Fitting (28) getrennt werden kann, um den Produktlagerabschnitt (12) von der Produktförderleitung (60) und vom Gefrierzylinder (18) zu isolieren, und wobei sich die selbstschließende Dichtung (30) in einer geschlossenen Position befindet, wenn die Sonde (32) nicht mit dem Fitting (28) interagiert, und wobei die Sonde (32) ferner ein Sperrventil (62) umfasst, das angeordnet ist, einen Fluss von der Produktförderleitung (60) in den Produktspeicherabschnitt (12) zu verhindern,
wobei, wenn die Sonde (32) vom Fitting (28) entfernt wird, die Sonde (32) in einen Rezirkulationsanschluss (44) der Rezirkulationsleitung (24) installiert werden kann, um eine Rezirkulationsanschluss(44)-Sonde(32)-Schnittstelle zu definieren, um einen Rezirkulationflusspfad für das Produkt (14) herzustellen, das den Gefrierzylinder (18) verlässt, durch die Rezirkulationsleitung (24) fließt, durch die Produktförderleitung (60) fließt und, von der Pumpe (40) getrieben, zum Gefrierzylinder (18) zurückkehrt,
wobei der Wärmebehandlungskreis (26) von der Pumpe (40) durch die Produktförderleitung (60), durch den Gefrierzylinder (18), vom Gefrierzylinder (18) durch die Rezirkulationsleitung (24) und durch die Rezirkulationsanschluss(44)-Sonde(32)-Schnittstelle definiert ist.

2. Ausgabemaschine (10) für gefrorene Lebensmittel nach Anspruch 1, wobei der Gefrierzylinder (18) ein Gefrierzylinderbehältnis (50) umfasst, wobei sich die leitende Heizung (46) am Gefrierzylinderbehältnis (50) befindet.

3. Ausgabemaschine (10) für gefrorene Lebensmittel nach Anspruch 1, wobei der Gefrierzylinder (18) ein Gefrierzylinderbehältnis (50) umfasst und die leitende Heizung (46) angeordnet ist, einen Mikrokanalwärmetauscher (56) zu erwärmen, wobei der Mikrokanalwärmetauscher (56) mindestens teilweise um das Gefrierzylinderbehältnis (50) gewunden ist und eine Vielzahl von Mikrokanälen (58) beinhaltet, in denen sich das Wärmeübertragungsmedium befindet.

4. Ausgabemaschine (10) für gefrorene Lebensmittel nach Anspruch 3, wobei sich die leitende Heizung (46) an einem Wärmetauscherkörper des Mikrokanalwärmetauschers (56) befindet.

5. Ausgabemaschine (10) für gefrorene Lebensmittel nach Anspruch 3, wobei sich die leitende Heizung (46) an einer oder mehreren einer Wärmetauscherzulaufleitung und einer Wärmetauscherrücklaufleitung des Mikrokanalwärmetauschers (56) befindet.

6. Ausgabemaschine (10) für gefrorene Lebensmittel nach Anspruch 1 oder Anspruch 2, wobei die Maschine (10) dazu ausgelegt ist, das Volumen des Produkts (14) in einem Wärmebehandlungskreis (26) innerhalb von 90 Minuten auf eine Wärmebehandlungstemperatur zu erwärmen und die Wärmebehandlungstemperatur für mindestens 30 Minuten zu halten.

7. Ausgabemaschine (10) für gefrorene Lebensmittel nach Anspruch 6, wobei die Wärmebehandlungstemperatur mindestens 65,6 Grad Celsius (150 Grad Fahrenheit) beträgt.

8. Ausgabemaschine (10) für gefrorene Lebensmittel nach Anspruch 2, wobei das Gefrierzylinderbehältnis (50) dazu ausgelegt ist, das Produkt (14), das dadurch fließt, zu gefrieren, und wobei die leitende Heizung (46) dazu ausgelegt ist, das Produkt (14) auswählbar auf eine Wärmebehandlungstemperatur zu erwärmen.

9. Ausgabemaschine (10) für gefrorene Lebensmittel nach Anspruch 8, wobei die leitende Heizung (46) in direktem Kontakt mit dem Gefrierzylinderbehältnis (50) ist.

10. Verfahren zum Durchführen eines Wärmebehandlungszyklus an einem Volumen eines Produkts in der Ausgabemaschine (10) für gefrorene Lebensmittel nach Anspruch 1, das die folgenden Schritte umfasst:
Zirkulieren eines Produkts (14) durch den Wärmebehandlungskreis (26);
Erwärmen des Produkts (14) im Wärmebehandlungskreis (26) innerhalb einer ersten Zeitdauer via die leitende Heizung (46) auf eine Wärmebehandlungstemperatur;
Halten des erwärmten Volumens des Produkts (14) im Wärmebehandlungskreis (26) für eine zweite Zeitdauer auf der Wärmebehandlungstemperatur und
Abkühlen des erwärmten Volumens des Produkts (14) im Wärmebehandlungskreis (26) via den Gefrierzylinder (18).

11. Verfahren nach Anspruch 10, das ferner folgenden Schritt umfasst:
Rezirkulieren des abgekühlten Volumens des Produkts (14) via die Pumpe (40) durch den Wärmebehandlungskreis (26).

## Revendications

1. Machine (10) de distribution d'aliments congelés, comprenant :
une partie de stockage de produit (12) ayant un conteneur pour stocker un produit liquide (14) pour son utilisation par la machine ;
un cylindre de congélation (18) connecté de manière opérationnelle à la partie de stockage de produit (12) via une ligne d'amenée de produit (60) et une pompe (40), le cylindre de congélation (18) étant configuré pour congeler le produit ;
une partie de distribution (22) connectée de manière opérationnelle au cylindre de congélation (18), la partie de distribution (22) étant configurée pour distribuer un produit alimentaire congelé transporté depuis le cylindre de congélation (18) ; et
un élément chauffant conducteur (46) fixé à une paroi extérieure du cylindre de congélation (18) de la machine (10) de distribution d'aliments congelés, l'élément chauffant conducteur (46) étant configuré pour chauffer un volume du produit (14) dans la machine (10) de distribution d'aliments congelés dans un circuit de traitement thermique (26), dans laquelle le circuit de traitement thermique (26) comprend le cylindre de congélation, la ligne d'amenée de produit et une ligne de recirculation (24), et l'élément chauffant conducteur (46) comporte un élément de chauffage (48) connecté à une source de tension (54) via un ou plusieurs fils électriques (52) ;
**caractérisée en ce que** :
le conteneur de stockage de produit comprend un raccord (28) avec un joint étanche (30) à fermeture automatique ;
la ligne d'amenée de produit (60) comporte une sonde (32) qui peut interagir avec le raccord (28) pour permettre au produit (14) de s'écouler de la partie de stockage de produit (12) dans la ligne d'amenée de produit (60), dans laquelle la sonde (32) peut être déconnectée du raccord (28) pour isoler la partie de stockage de produit (12) de la ligne d'amenée de produit (60) et du cylindre de congélation (18), et dans laquelle le joint étanche (30) à fermeture automatique est dans une position fermée lorsque la sonde (32) n'interagit pas avec le raccord (28), et dans laquelle la sonde (32) comprend en outre une soupape antiretour (62) qui est agencée pour empêcher un écoulement depuis la ligne d'amenée de produit (60) dans la partie de stockage de produit (12),
dans laquelle, lorsque la sonde (32) est retirée du raccord (28), la sonde (32) peut être installée sur un orifice de recirculation (44) de la ligne de recirculation (24) pour définir une interface d'orifice de recirculation (44)/de sonde (32), pour établir un chemin d'écoulement de recirculation pour le produit (14) qui quitte le cylindre de congélation (18), s'écoule à travers la ligne de recirculation (24), s'écoule à travers la ligne d'amenée de produit (60) et retourne au cylindre de congélation (18) à mesure qu'il est poussé par la pompe (40),
dans laquelle le circuit de traitement thermique (26) est défini à partir de la pompe (40) à travers la ligne d'amenée de produit (60), à travers le cylindre de congélation (18), à partir du cylindre de congélation (18) à travers la ligne de recirculation (24) et à travers l'interface d'orifice de recirculation (44)/de sonde (32).

2. Machine (10) de distribution d'aliments congelés selon la revendication 1, dans laquelle le cylindre de congélation (18) comprend un récipient de cylindre de congélation (50), dans laquelle l'élément chauffant conducteur (46) est situé au niveau du récipient de cylindre de congélation (50).

3. Machine (10) de distribution d'aliments congelés selon la revendication 1, dans laquelle le cylindre de congélation (18) comprend un récipient de cylindre de congélation (50), et l'élément chauffant conducteur (46) est agencé pour chauffer un échangeur de chaleur (56) à micro-canaux, l'échangeur de chaleur (56) à micro-canaux étant enroulé au moins partiellement autour du récipient de cylindre de congélation (50) et comportant une pluralité de micro-canaux (58) dans lesquels un milieu de transfert de chaleur est situé.

4. Machine (10) de distribution d'aliments congelés selon la revendication 3, dans laquelle l'élément chauffant conducteur (46) est situé au niveau d'un corps d'échangeur de chaleur de l'échangeur de chaleur (56) à micro-canaux.

5. Machine (10) de distribution d'aliments congelés selon la revendication 3, dans laquelle l'élément chauffant conducteur (46) est situé au niveau d'une ou plusieurs parmi une ligne d'alimentation d'échangeur de chaleur et une ligne de retour d'échangeur de chaleur de l'échangeur de chaleur (56) à micro-canaux.

6. Machine (10) de distribution d'aliments congelés selon la revendication 1 ou la revendication 2, dans laquelle la machine (10) est configurée pour chauffer le volume du produit (14) dans le circuit de traitement thermique (26) jusqu'à une température de traitement thermique pendant 90 minutes, et pour le maintenir à la température de traitement thermique pendant au moins 30 minutes.

7. Machine (10) de distribution d'aliments congelés selon la revendication 6, dans laquelle la température de traitement thermique est d'au moins 65,6 degrés (150 degrés Fahrenheit).

8. Machine (10) de distribution d'aliments congelés selon la revendication 2, dans laquelle le récipient de cylindre de congélation (50) est configuré pour congeler le produit (14) s'écoulant à travers celui-ci, et dans laquelle l'élément chauffant conducteur (46) est configuré pour chauffer de manière sélective le produit (14) jusqu'à une température de traitement thermique.

9. Machine (10) de distribution d'aliments congelés selon la revendication 8, dans laquelle l'élément chauffant conducteur (46) est en contact direct avec le récipient de cylindre de congélation (50).

10. Procédé de réalisation d'un cycle de traitement thermique sur un volume d'un produit dans la machine (10) de distribution d'aliments congelés selon la revendication 1, comprenant les étapes :
de circulation d'un produit (14) à travers le circuit de traitement thermique (26) ;
de chauffage du produit (14) dans le circuit de traitement thermique (26) jusqu'à une température de traitement thermique pendant une première durée via l'élément chauffant conducteur (46) ;
de maintien du volume chauffé du produit (14) dans le circuit de traitement thermique (26) à la température de traitement thermique pendant une deuxième durée ; et,
de refroidissement du volume chauffé du produit (14) dans le circuit de traitement thermique (26) via le cylindre de congélation (18).

11. Procédé selon la revendication 10, comprenant en outre les étapes :
de recirculation du volume refroidi du produit (14) à travers le circuit de traitement thermique (26) via la pompe (40).
